# EUROPEAN PATENT SPECIFICATION

(11) **EP 2 584 770 B1**
(45) Date of publication and mention of the grant of the patent: **06.08.2014**
(21) Application number: 12180328.2
(22) Date of filing: 13.08.2012
(51) Int. Cl.: G06Q 10/10, H04M 1/725, H04L 12/58

(54) **Electronic device and method for reply message composition**
Elektronische Vorrichtung und Verfahren zur Antwortnachrichterstellung
Dispositif électronique et procédé pour la composition de messages de réponse

(30) Priority: 17.10.2011 US 201161548168 P; 28.06.2012 US 201213536508
(43) Date of publication of application: 24.04.2013
(73) Proprietor: BlackBerry Limited, Waterloo, ON N2K 0A7 (CA)
(72) Inventor: Stovicek, Thomas Jan, Redwood City, CA California 94065 (US); Del Pasqua, Kieran Cloud, Mississauga, Ontario L4W 0B5 (CA)
(74) Representative: Moore, Barry

(56) References cited:
- EP-A1- 2 096 844
- WO-A1-2008/141339
- WO-A2-2008/030967
- US-A1- 2004 268 265

## Description

### Cross-Reference to Related Applications

This application claims priority to United States Provisional Application No. 61/548,168 filed 17 October 2011.

### Technical Field

The present disclosure relates generally to an electronic device and method for generation of reply messages in response to received messages.

### Background

A messaging client executing on an electronic device may be configured to display messages to the user in a message listing, which may present headers or summary information about individual messages or groups of messages. To reply to an individual message listed in the message listing, the individual message is selected and a reply command invoked to generate a new message composition screen replacing the message listing display. Reply message content may be entered in the composition screen. To reply to a message comprised in a message group listed in the message listing, the message group is selected and a further listing of the individual messages in the group may be displayed in response; an individual message within the group may then be selected and the reply command again invoked to generate the new message composition screen. Once a command to send the reply message is invoked, transmission of the reply message is initiated by the electronic device and the previous message listing screen is again displayed.

WO 2008/030967 describes a system for displaying messages associated with a selected contact and for sending messages in different formats to that contact.

WO 2008/141339 describes a system for providing a user with options to select different reply formats when a message is received.

### Brief Description of the Drawings

In drawings which illustrate by way of example only embodiments of the present application, in which like reference numerals describe similar items throughout the various figures,
FIG. 1 is a block diagram of an example of an electronic device for use with the embodiments and examples described herein.
FIG. 2 is an example topology of a network for use with the electronic device of FIG. 1.
FIG. 3 is a schematic diagram of select message-related components of the electronic device of FIG. 1.
FIGS. 4A-4D are illustrations of example user interface screens for an email application displayable by the electronic device.
FIG. 5 is a further illustration of an example user interface with an overlaid virtual keyboard.
FIGS. 6A-6D are illustrations of further example user interfaces for a unified inbox application displayable by the electronic device.
FIGS. 7A and 7B are illustrations of further example user interfaces for a messaging application displayable by the electronic device.
FIG. 8 is a flowchart illustrating a process for composition and transmission of reply messages.
FIG. 9 is a flowchart illustrating a further process for composition and transmission of reply messages.

### Detailed Description

The embodiments and examples described herein accordingly facilitate the initiation, composition and transmission of messages in reply to a previously received message or an existing message thread through improvements to methods, electronic devices, and systems implemented at or on electronic devices. For example, there is provided a method implemented at an electronic device, the method comprising: displaying a message listing screen including a listing of a plurality of email messages associated with different email message threads and a reply message input field, the message listing screen being active so as to receive input events; and while the message listing screen continues to be displayed and active, the message listing screen receiving an input event comprising entry of content in the reply message input field; detecting a send command; and in response to the detected send command, sending the entered content in a reply email message in reply to a selected message referenced by the listing.

In one aspect, the listing of the plurality of email messages comprises a listing of a plurality of different email message threads.

In another aspect, the selected message is a most recent message in a selected one of the plurality of different email message threads.

In still another aspect, the method further comprises, after detecting the send command: identifying an email message referenced by the listing of the plurality of email messages as the selected message; and generating the reply email message, the reply email message including the entered content and being addressed to one or more recipients determined from the selected message.

In yet another aspect, the message listing screen includes a preview of the selected message.

Still further, in another aspect the selected message is not the most recent message in the listing of the plurality of email messages.

In a further aspect, the method further comprises determining, after detecting the send command, one or more recipients for the reply email message.

In yet a further aspect, the listing of the plurality of email messages includes both received and sent email messages, and the method further comprises, after sending the reply email message, updating the message listing to include the reply email message while the message listing screen remains active.

In still a further aspect, the message listing screen includes a listing of messages of one or more other message types selected from instant messages, short messages, and social messages.

Another aspect provides that the method further comprises detecting a command identifying one of the plurality of email messages as the selected message prior to receiving the input event comprising entry of content in the reply message input field.

In still another aspect, the reply message input field is not associated with a single one of the plurality of email messages or a single email message thread. Still further, the message listing screen can comprises a single reply message input field.

Still further, receiving the input event comprises entry of content in the reply message input field occurs without prior receipt of a command to initiate a reply email message.

There is also provided an electronic device, which may be a personal computing device, mobile communication device, tablet computing device, or any suitable electronic device as mentioned herein that is adapted or capable of implementing the methods described herein.

There is further provided a computer-readable medium, or electronic device-readable medium, which may be physical or non-transitory, bearing or storing code which, when executed by an appropriate device, causes the device to execute the methods described herein. The code may be provisioned on the device by means of transmission over a network, which may include wireless transmission.

These embodiments and examples will be described and illustrated primarily in relation to electronic devices such as wireless communication devices. It will be appreciated by those skilled in the art, however, that this description is not intended to limit the scope of the described embodiments to implementation on these particular wireless devices. For example, the methods and systems described herein may be applied to any appropriate electronic device adapted to initiate transmission or enable reception of data over a fixed or wireless connection, which in some cases may include an electronic device provided with a wireless transceiver configured to communicate using one or more wireless protocols. The electronic device may be portable or wirelessly enabled or not, provided with voice communication capabilities or not, and additionally or alternatively may be adapted to process data and carry out operations on data in response to user commands for any number of purposes, including productivity and entertainment. Thus, the embodiments and examples described herein may be implemented on electronic devices adapted for communication or messaging, including without limitation tablet computing devices, cellular phones, smartphones, wireless organizers, personal digital assistants, desktop computers, terminals, laptops, handheld wireless communication devices, notebook computers, portable gaming devices, Internet-connected televisions, set-top boxes, digital picture frames, in-vehicle entertainment systems, entertainment devices such as MP3 or video players, and the like. Unless expressly stated, an electronic device may include any such device or any device capable of sending and receiving, or implementing a messaging client for use in sending and receiving, messages to one or more recipients. As contemplated herein, the electronic device may have an integrated display, or may comprise a display interface configured to output data to be rendered or painted to an external display unit such as an external monitor or panel, television screen, projector, or virtual retinal display (via a data port or transmitter, such as a Bluetooth® transceiver, USB port, HDMI port, DVI port, and the like). References herein to a "display" are intended to encompass both integrated and external display units, and references to a "display interface" are intended to encompass data ports and transmitters used to output signals to display units, whether integrated or external.

The embodiments herein will also be described and illustrated primarily in relation to email messages, such as those constructed and implemented in accordance with known Internet messaging standards including Internet Message Format RFC 5322 and RFC 2822, published by the Internet Engineering Task Force, as well as their predecessor, successor, and companion standards. These standards are not necessary for implementing the embodiments and examples herein, and it will be appreciated that "email" includes any definition for an appropriate electronic message that would be known to those skilled in the art. It will also be appreciated by those skilled in the art that these embodiments and examples are not intended to be exclusive of other message types or applications, and extend to other types and formats of messages, whether text or multimedia-based. Generally these message formats are adaptable to support the creation of "child" messages based on a "parent" message. A non-limiting example of this is the generation of a reply or forward message (the child message) from an earlier message (the parent message). The child message may comprise an express or implied reference to the parent message, for example by including a value in the child message header expressly referring to a message identifier for the parent, or by including in the child message body content at least an excerpt of the message body content of the parent. Each message may thus be expressly or impliedly associated with another specific message. The definition of such reply or forward messages using various identifiers or techniques will be known to those skilled in the art.

The association of individual messages in this manner may be contrasted to those message protocols in which the messages are delivered between senders and recipients in a single session or stream, in which later messages are not associated with a specific earlier message in the stream, but are generally only associated with the stream itself However, the person skilled in the art will appreciate that any appropriate message format may be employed, provided it is adaptable for use with the embodiments described herein. Examples of other message formats include "chat" messages, instant messages (IM), PIN messages, private messages, SMS (Short Message Service), MMS (Multimedia Messaging Service), VVM (Visual Voicemail) and the like. The message formats to which these embodiments are applicable need not be restricted to those standardized formats. The formatting and transmission of all such messages, storage and indexing of such messages, and the implementation of suitable messaging infrastructures to support such communications, will also be known to those skilled in the art.

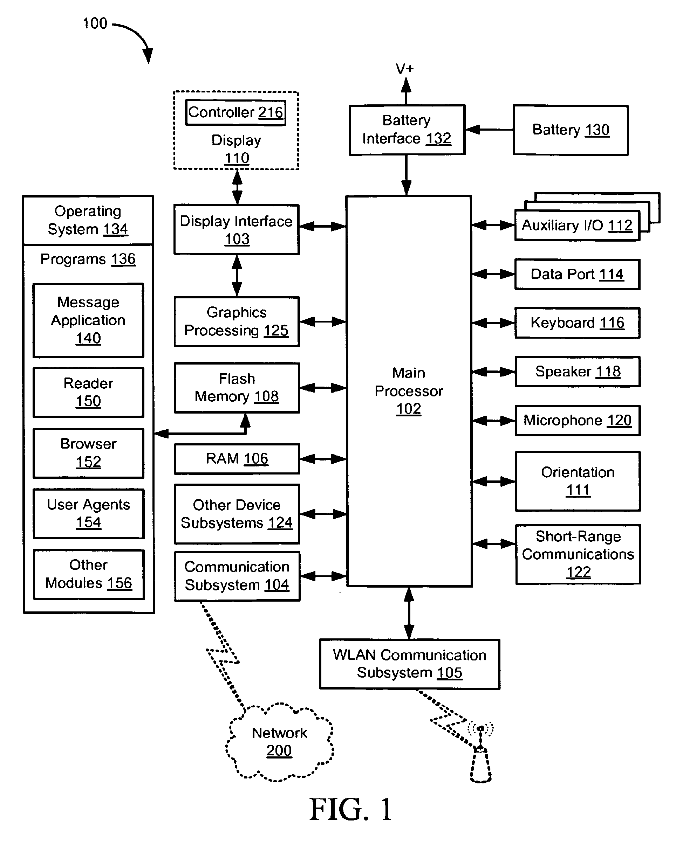

FIG. 1 is a block diagram of an example embodiment of an electronic device 100 that may be used with the embodiments and examples described herein. The electronic device 100 includes a number of components such as a main processor 102 that controls the overall operation of the electronic device 100. It should be understood that the components described in FIG. 1 are optional and that an electronic device used with various embodiments and examples described herein may include or omit components described in relation to FIG. 1.

The electronic device 100 may be a battery-powered device including a battery interface 132 for receiving one or more rechargeable batteries 130. Communication functions, including data and voice communications, are performed through one or more communication subsystems 104, 105, and/or 122 in communication with the processor 102. Data received by the electronic device 100 can be decompressed and decrypted by a decoder, operating according to any suitable decompression techniques, and encryption/decryption techniques according to one or more various encryption or compression standards known to persons of skill in the art.

If equipped with a communication subsystem 104, this subsystem 104 receives data from and sends data to wireless network 200. In this example of the electronic device 100, the communication subsystem 104 is configured in accordance with one or more wireless communications standards. New wireless communications standards are still being defined, but it is believed that they will have similarities to the network behaviour described herein, and it will also be understood by persons skilled in the art that the examples described herein are intended to use any other suitable standards that are developed in the future. The wireless link connecting the communication subsystem 104 with the wireless network 200 represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 105 or a short-range and/or near-field communications subsystem 122 also shown in FIG. 1. The WLAN communication subsystem 105 may operate in accordance with a known network protocol such as one or more of the 802.11™ family of standards developed or maintained by IEEE. The communications subsystems 105 and 122 provide for communication between the electronic device 100 and different systems or devices without the use of the wireless network 200, over varying distances that may be less than the distance over which the communication subsystem 104 can communicate with the wireless network 200. The subsystem 122 can include an infrared device and associated circuits and/or other components for short-range or near-field communication.

The communication subsystem component 104, 105, 122 may include a receiver, transmitter, and associated components such as one or more embedded or internal antenna elements, Local Oscillators (LOs), and a processing module such as a Digital Signal Processor (DSP) in communication with the transmitter and receiver. The particular design of the communication subsystems 104, 105, 122, or other communication subsystem is dependent upon the communication network 200 with which the electronic device 100 is intended to operate. Thus, it should be understood that this description serves only as one example. It should be understood that any of the communication subsystems 104, 105, 122 may optionally be included in the electronic device 100. Alternatively, a communication subsystem provided in a dongle or other peripheral device (not shown) may be connected to the electronic device 100, either wirelessly or by a fixed connection such as a USB port, to provide the electronic device 100 with access to a network. If provided onboard the electronic device 100, the communication subsystems 104, 105 and 122 may be separate from, or integrated with, each other.

The main processor 102 also interacts with additional subsystems such as a Random Access Memory (RAM) 106, a flash memory 108, a display interface 103, other data and memory access interfaces such as an auxiliary input/output (I/O) subsystem 112 or a data port 114, a keyboard 116, a speaker 118, a microphone 120, the short-range communications 122 and other device subsystems 124. The communication device may also be provided with an accelerometer 111, which may be used to detect gravity- or motion-induced forces and their direction. Detection of such forces applied to the electronic device 100 may be processed to determine a response of the electronic device 100, such as an orientation of a graphical user interface displayed on the display 110 in response to a determination of the current orientation of the electronic device 100.

In some examples, the electronic device 100 may comprise an integral display screen 110, shown in phantom in FIG. 1. For example, a handheld or portable electronic device 100 such as a tablet, laptop, or smartphone typically incorporates a display screen 110 in communication with the main processor 102 via the display interface 103, whereas other electronic devices 100 are connected to external monitors or screens using the display interface 103, as in the case of a desktop computer. However, smaller devices, such as the tablet, laptop or smartphone, may also be connected to external monitors or screens, in which case the display interface 103 represented in FIG. 1 includes an interface for connection of an external display device.

Further, in some examples, the display 110 may be a touchscreen-based device, in which the display 110 is a touchscreen interface that provides both a display for communicating information and presenting graphical user interfaces, as well as an input subsystem for detecting user input that may be converted to instructions for execution by the device 100. The display 110 may thus be the principal user interface provided on the electronic device 100, although in some examples, additional buttons, variously shown in the figures or a trackpad, or other input means may be provided. If a touchscreen is provided, then other user input means such as the keyboard 116 may or may not be present. The controller 216 and/or the processor 102 may detect a touch by any suitable contact member on the touch-sensitive display 110.

When a user specifies that a data file is to be outputted to the display interface 103, the data file is processed for display by the main processor 102. This processing may include, in the case of structured documents, parsing of the document to render the document or a portion thereof as an image file, which is then provided as output to the display interface 103 as discussed below. The main processor 102 may thus include a visualization subsystem, implemented in hardware, software, or a combination thereof, to process the data file for display.

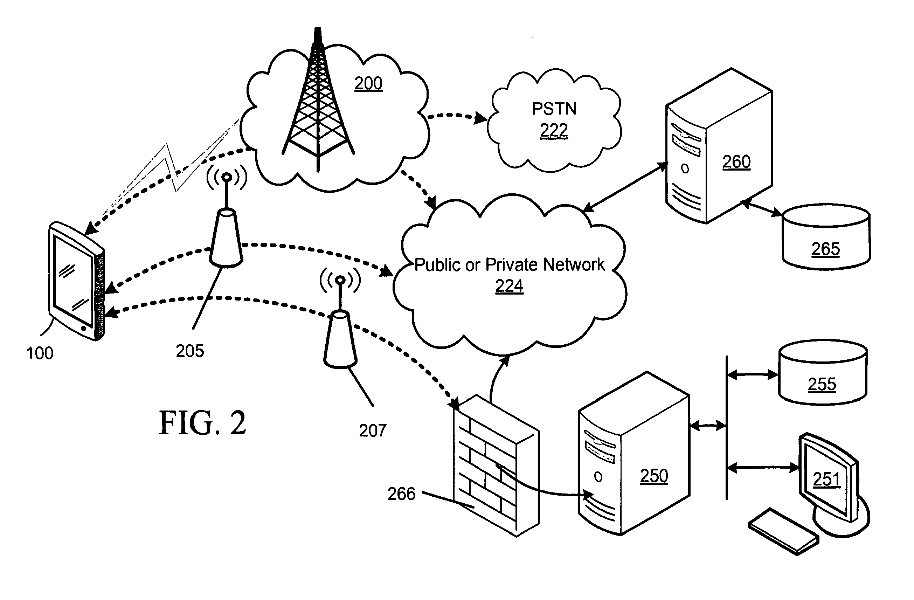

Depending on the input data file, the processing carried out by the processor 102 in preparation for display may be relatively intensive, and the processing may consume a significant amount of processor time and memory. In particular, processing data files originally optimized or prepared for visualization on large-screen displays on a portable electronic device display often requires additional processing prior to visualization on the small-screen portable electronic device displays. Thus, the electronic device 100 may also be provided with a graphics processor module 125 separate from the main processor 102, again implementable in hardware, software, or a combination thereof. The graphics processor module 125 may comprise a dedicated image processor with associated circuitry, including memory 230 (shown in FIG. 2) that is separate from other memory in the electronic device 100, such as the RAM 106, flash memory 108, and any memory internal to the main processor 102. The operation of such graphics processor modules will be known to those skilled in the art. Upon an application processing data file for display determining that the file includes content or transformations that are appropriately handled by the graphics processor module 125, those components of the file are provided to the graphics processor module 125 with associated commands for the rendering of that content for output to the display interface 103. The graphics processor module 125 can be configured to retrieve image files stored in device memory (such as RAM 106 or flash memory 108), or in its own resident memory 230, and to apply these image files as texture maps to surfaces defined in accordance with the received commands.

The electronic device 100 also includes an operating system 134 and software components 136 to 156 which are described in more detail below. The operating system 134 and the software components 136 to 156 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 138 to 152, such as specific device applications, or parts thereof, can be temporarily loaded into a volatile store such as the RAM 106. Select other modules 152 may also be included, such as those described herein. Other software components can also be included, as is well known to those skilled in the art.

The subset of software applications 136 that control basic device operations, including data and voice communication applications, will normally be installed on the electronic device 100 during its manufacture. Other software applications include a message application 138 that can be any suitable software program that allows a user of the electronic device 100 to send and receive electronic messages. Various alternatives exist for the message application 138 as is well known to those skilled in the art. Messages that have been sent or received by the user are typically stored in the flash memory 108 of the electronic device 100 or some other suitable storage element in the electronic device 100. In at least some examples, some of the sent and received messages can be stored remotely from the electronic device 100 such as in a data store of an associated host system with which the electronic device 100 communicates.

Other types of software applications can also be installed on the electronic device 100, such as feed or content readers 150, web browsers 152, other user agents 154, and other modules 156. These software applications may be supplied by the electronic device manufacturer or operating system provider, or may be third party applications. Examples of applications include games, calculators, and utilities. The additional applications can be loaded onto the electronic device 100 through at least one of the communications subsystems 104, 105, 122, the auxiliary I/O subsystem 112, the data port 114, or any other suitable device subsystem 124. This flexibility in application installation increases the functionality of the electronic device 100 and can provide enhanced on-device functions, communication-related functions, or both.

In use, a received signal such as a text message, an email message, or webpage download will be processed by the receiving communication subsystem 104, 105, 122 and input to the main processor 102. The main processor 102 will then process the received signal for output via the display interface 103 or alternatively to the auxiliary I/O subsystem 112. A user can also compose data items, such as email messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 may be an alphanumeric keyboard and/or telephone-type keypad. However, other types of keyboards can also be used. A composed item can be transmitted over the wireless network 200 through the communication subsystem 104. It will be appreciated that if the display 110 is a touchscreen, no keyboard 116 may be included, although the operating system of the electronic device 100 or an application executing thereon is so configured, a virtual keyboard responsive to touch events and other contact events on the touchscreen for user input of data may be provided. Implementation of a virtual keyboard on a touchscreen device will be known to those skilled in the art. However, the presence of a touchscreen does not preclude the inclusion of other I/O subsystems such as a keyboard 116, or pointing devices such as trackballs, trackpads, and the like.

An example of a possible network topology for use with the electronic device 100 is illustrated in FIG. 2. It will be understood by those skilled in the art that the schematic of FIG. 2 is merely representative of only particular aspects of a network, and omits other components that are typically included for ease of exposition, such as peripheral devices, routers, mobile data servers, and the like; and further, that the network illustrated herein may include different components and/or be arranged in different topologies than that shown in FIG. 2. In some cases, the electronic device may be registered with an organizational domain provided in a host system, which can be an own-premises local area network (LAN), or wide area network in communication with LANs, with local computing resources such as one or more servers 250, one or more data repositories 255 and client devices 251 such as terminals or workstations. The servers 250 and data repositories 255 represent controllers, security and information technology policy modules, application servers, messaging servers, file servers, databases, memory devices and the like for providing services its registered users. The services can include but are not limited to messaging, directory services, collaborative applications, calendaring applications, search engines and file servers, and it will be appreciated by those skilled in the art that the various network components 250, 255, 251 will be adapted for use with those services.

Messaging services are implemented using one or more servers 250 provided with means for storing messages (e.g., a database or a suitable data repository 255) for each message service or format available over the organizational network, such as email, instant messaging, voicemail, and the like. The server 250 (or a plurality of such servers) and its corresponding data repository 255 can therefore store all received and sent messages on behalf of each user within the organization. In some examples, messages sent and received by a user may be stored only locally on the user's client device (e.g. a desktop computer or other personal computing device), while in other examples the messages are stored both locally at the client device as well as the server, in which case the message stores on the client device and the server can be periodically synchronized or reconciled. The host system may operate from behind a firewall or proxy server 266, which provides a secure node and optionally a wireless internet gateway for the host system. Client devices can then access the host system wirelessly through the firewall or proxy server 266, as denoted by the access point 207. External access to the host system by mobile client devices 100 may also be provided via a public or private network 224. If suitably provisioned, the electronic device 100 may be configured to access the public switched telephone network 222 through a wireless network 200. In turn, the wireless network 200 provides the mobile device 100 with connectivity to the Internet or other public wide area network 224, and thence to the host system. Alternatively or additionally, if the mobile device is provisioned to communicate over wireless networks that are typically IP-based, such as wireless LANs implementing the Wi-Fi™ protocol (one or more of the IEEE 802.11™ suite of protocols), personal area networks implementing other protocols such as Bluetooth, other wireless networks implementing wireless broadband standards such as WiMAX™ (one or more of the IEEE 802.16™ suite of protocols), and the like, the electronic device 100 accesses the public or private wide area network 224 through a third-party access point, such as the user's own personal access point and Internet connection, or a third party hotspot device, as denoted by the access point 205.

The services above, such as directory services and messaging, can be provided in a self-hosted system as suggested above, i.e., a host system supplied by and managed by the organization. However, the person skilled in the art will appreciate that one or more services may instead be provided by third parties directly to the user of the electronic device 100, or for the user as part of the organizational domain in a software as a service, platform as a service, or infrastructure as a service arrangement, colloquially referred to as cloud computing services. For example, email messaging services or collaborative applications can be hosted by a third party service maintaining an external server 260 and data repository 265. Access to the external server 260 can be made available both externally to external client devices such as the electronic device 100, and/or to client devices 251 over the public or private network 224.

The user of the electronic device 100 may be provided with an account in the organizational domain, whether self-hosted or externally hosted by a third party, or with the service provided by the server 260. Messaging services in particular are accessible by the users through messaging clients executing on the electronic device 100 or client device 251, which communicates with a message server such as the server 250 or 260. The message server, or a directory server in communication with the message server (such as another server 250 or 260, not shown) provides access to a global directory listing or contact database for the organization or service. The organizational directory listing may not be truly global for each user; for example, users may have differing levels of access to network resources depending on their credentials or permissions granted by an administrator. This directory listing stores contact data (e.g. first and last name, friendly or common name, mailing address, email address, IM address, telephone number and/or SMS number, and so forth) for each user within the organization or registered with the service. Optionally, the directory listing stores contact data for individuals and other entities outside the organization.

Further, the electronic device 100 may include a personal contacts database or address book, which can be a subset of the contact data in the global directory listing, or contain contact data for other individuals or entities not represented in the global directory listing. Population of the personal address book is typically carried out by the user of the electronic device 100 either manually (through express entry of contact data in the personal address book) or automatically (through the user's selection of contact data from the global directory listing to be included in the personal address book). The contents of the individual personal address books may be periodically synchronized with the contact data stored in the global directory listing. The address book data can be accessed through an independently executing address book application on the client device, or alternatively through a messaging client application.

A single electronic device 100 may be provisioned for a single or for multiple messaging accounts and be configured to employ one or more messaging formats. For example, the user may wish to send and receive messages using multiple accounts provided by a single service provider, access multiple services operating over the same or different networks to send and receive messages in different formats, or access multiple services providing messages in the same communication format. An example of this is email messages received both at a user account maintained by a host system with which the electronic device 100 is registered and optionally configured to communicate via an encrypted tunnel, and at a user account provided by a third party service provider whose services are available to the general public. Typically, messages associated with different accounts, services and/or formats are stored in distinct data stores, folders or files at the electronic device 100. For example, each message item received or generated at the electronic device 100 in association with a given service (such as email) can be stored as a separate message or data object in a data store associated with the service, retrievable for presentation to the user using a dedicated application executing at the electronic device 100 and associated with that particular message, service, or content format.

In addition, the message objects may be indexed for retrieval on the electronic device 100 either through a dedicated application, through a unified search process implemented in the device operating system, or through another application or process for presentation of message listings or content for multiple accounts, services or formats. An example of this latter type of message application is a "unified inbox" or "unified message listing" application, which is configured to present to the user a message listing that can be considered to be a global message or content list. For clarity, as will be appreciated by those skilled in the art, the term "inbox", unless stated otherwise, is intended to be inclusive of message listings that can include references not only to received messages, but also to messages originating and/or transmitted from the electronic device 100, drafts, and other messages that are not received at the device or stored in received message folder or inbox data store. A "unified" inbox or message listing thus provides a unified view of message information that serves as an entry point for access to individual messaging services or individual messaging applications associated with each of the message types included in the unified inbox. The message or content elements displayed in the unified inbox display may include, in the case of messages such as email, header data such as sender, timestamp, and subject line. In addition, or alternatively, at least a portion of the message body content may also be displayed in the unified inbox. In the case of other message types, such as instant messages, the information displayed may include message body content in place of message header data.

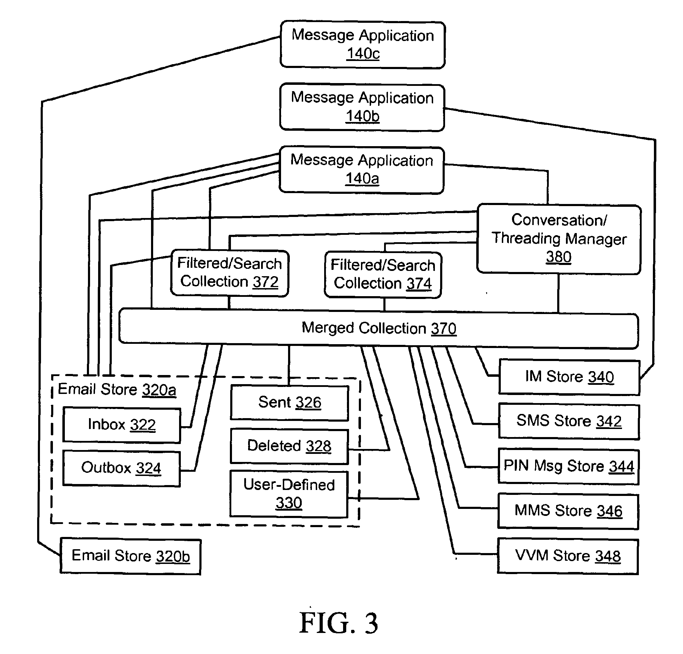

FIG. 3 provides a more detailed illustration of a possible arrangement of message data stores in relation to one or more message applications such as a dedicated messaging client or unified inbox application 140a, IM application 140b and email application 140c, and to a conversation or threading manager for grouping distinct messages in conversations or threads for presentation by the message applications. These data stores may be maintained at the electronic device 100 or at a remote location accessible to the electronic device 100. In the case of a mobile communication device, message data stores are typically maintained at the device itself, although the data stores at the device may represent only a portion of the complete message data stored in association with a given messaging account. Complete data stores may also be maintained at a remote location as noted above. When the electronic device 100 is configured to support a number of message formats, message data may be stored in a number of distinct data stores, including email stores 320a and 320b, IM store 340, SMS store 342, PIN message (messages addressed using a personal identification number rather than an email address or telephone number) store 344, MMS store 346, and VVM store 348. There may be more than one store of a given message type, which may be associated with different user accounts or different service providers. Thus, there can be more than one message application for a given message format (e.g., email, one corresponding to each of email stores 320a and 320b, although only one email application 140c is depicted in FIG. 3). The various message applications can obtain data from their respective data stores, and in the case of select applications such as the unified inbox application 140a, from other data sources described below.

A given message store, such as the email store 320a, may include a number of folders such as an inbox folder 322, which may be a default folder specified for all incoming messages received at the electronic device 100 (although, as explained above, the term "inbox" in relation to an application such as a unified inbox application or other messaging app need not be so restrictive), or at an online service or the host system on behalf of a user account the electronic device 100; a sent folder 326, which may be another default folder specified for all messages sent successfully from the electronic device 100, or sent on behalf of a user account associated with the communication device; an outbox folder 324, another default folder specified for all messages in the process of being transmitted from the electronic device 100; a deleted folder 328 specified for those messages marked for deletion; and other user-defined folders 330. Implementation of message "folders"-whether by means of an explicitly-set flag value, inclusion of a message in a particular file or physical location, and the like, will be understood by those skilled in the art, and all such examples are contemplated herein. The message data stores include not only the message data itself (i.e., the message header and the message payload or content), but also ancillary information about the message such as metadata, including select message attributes. Some metadata may be provided within the header of the message. Other metadata such as internal message and thread identifiers (which may be different from message-ID, thread-ID or other message or in-reply-to values inserted into a message header for delivery), flags and timestamps, may be generated at the electronic device 100 and stored in association with the message upon receipt of the message or upon initial storage of the message in a communication device message store, and are not necessarily delivered with the message itself when the message is sent.

Attributes may be set by a message server, electronic device, or sender, such as flags indicating an importance or priority level, flags representing labels or tags assigned to a message (which may be set manually by a recipient or automatically by a communication device upon receipt), and flags or other values representing common message states or attributes such as "read", "new", "recent", "draft", "transmitting" or "pending", "draft", "deleted" and "error". The meanings of such attributes will be known to those skilled in the art, and as those skilled in the art will appreciate, these attributes are not intended to be limited by a single literal meaning and other terminology may be considered to be synonymous with these attributes. For example, "opened" may be considered to be synonymous with "read" and "unopened" with "unread". The existence of a flag or attribute associated with a given message may imply that its converse does not apply; for example, if a message is marked "read", it is not "unread" or "new", and thus it is not necessary to set a status value or flag indicating that the message "unread" or "new". Select attributes may be alterable or reversible by the user invoking a direct command to alter the attribute. A message that is originally "new" is changed to have a "read" or "opened" attribute once the user selects that particular message for display or other presentation (such as text-to-speech rendering), but this latter attribute may be altered by the user to "unread" or "unopened" even after it has been rendered for presentation at the electronic device 100.

The various message stores 320a..348, whether they are maintained at the electronic device 100 and/or at a remote location, comprise a set of data sources that may be directly accessed from the electronic device 100 and processed in diverse ways for customized presentation using a client application, such as the aforementioned unified inbox application 140a or other message applications 140b, 140c. As illustrated in FIG. 3, the application may directly access the data store, as in the example of message application 140b accessing the IM store 340 and the message application 140c accessing the email store 320b. Further, an application such as the unified inbox application 140a may register as a listener for each store 320a..348 of interest, and receive notifications from each store upon a change (such as storage of a new message in the message store or an update to the status of an existing message). For convenience, a merged message collection object 370 can be defined to create an aggregate master index of references for any messages stored in one of the message stores 320a..348. An example of such an object is identified in U.S. Patent No. 7,568,011, issued July 28, 2009. The merged message collection object 370 aggregates these indices to define an aggregated or merged collection of messages, which is then provided to the application to identify and retrieve message data directly from one of the data stores 320a..348, and to generate message listing displays using techniques known in the art. One or more filter or search collection objects 372, 374 defined with reference to one or more filter criteria (such as specific message attributes, header values, and keywords) to define a filtered collection of messages may be provided. These objects register as listeners with the merged message collection object 370, and receive notifications when the aggregated index changes (by addition or removal of a message or a change to a message status). Optionally, the filter collection object 272, 274 may register directly with one or more of the data stores, and receive notification from the data stores when a change is detected.

Messages are often presented in a message application in a "grouped", "conversation" or "threaded" mode, in which messages identified as belonging to a common thread are grouped together and presented in a single entry in message listing. In the examples described herein, message threads, groups, and conversations are used interchangeably. Accessing one of these single entries then invokes a further individual message list view in which the messages identified as belonging to that thread are displayed. The categorization or grouping of messages may be carried out using a variety of different rules and heuristics. A simple method of categorizing messages as belonging to a single "thread" is to assign all messages containing the same subject line (after excluding prefixes and tokens such as "Re:", "Fw:", and other strings denoting that a message is a reply or forward of a previously received message) to one thread. Another method of grouping parent and child (i.e., reply and forward) messages together in a thread is to determine whether messages are linked through an In-Reply-To value included in the message header, since the value would identify at least the immediately previous message in the message thread. Threads defined in this manner or in a similar manner may be referred to as "conversations", since it is presumed that the messages are linked through common topics, as is typical of oral conversation. However, the term "thread" is used herein to refer not only to specific groups or subcollections of messages that are determined to be related with each other through common topics or through assignment of a common thread identifier or other common token, but also to groups or subcollections of messages that are determined to be related with each other through other specifically defined common message characteristics or attributes. Messages that include a specific, predefined string of characters in their subject or body may be determined to belong to a single group or thread, or all messages identifying the same group of addresses or contacts in its header (whether they are identified in a To:, Cc: or From: line) may be determined to belong to a single group or thread. Identification of a thread in these examples may be carried out using a filtered or search collection from one of the filter objects 372, 374.

Determination of thread membership may be carried out by the message application, or alternatively carried out by a separate module at the electronic device 100. These options are represented by the conversation or threading manager 380, which may directly register with individual message stores 320a..348, merged message collection object 370 and/or filter collection objects 372, 374 to obtain message data, then generate a threaded index of messages derived from the merged index or from the individual message stores, querying the individual message stores as necessary to obtain any message attributes required to determine membership of a given message in a thread. A fuller description of the interoperation of these components is provided in U.S. Patent Application No. 13/025,822 filed on February 11, 2011.

Whether messages are displayed in a message listing individually or in a grouped or threaded fashion, typically the message application or unified inbox application 140a..c is configured to generate a message listing view comprising graphical user interface elements for display on the electronic device display 110, representing individual messages and/or groups of messages. The user may interact with the graphical user interface elements through commands input via one of the input interfaces provided for the electronic device 100 (e.g., the keyboard 116 or a touchscreen display) to select a particular message or message group, and to invoke actions to be applied to the selected message or message group. The message listing view typically includes summary information retrieved from the appropriate data store for each message or group, including, for example, subject line if available, sender and/or recipient(s), timestamp, status (e.g. received, read, sent, etc.), and optionally an excerpt of the message body. Some or all of this information may be presented for each message or group in the listing, which is typically arranged in reverse chronological or chronological order. Individual entries in the message listing can be selected by an input interface, and actions associated with the selected message may then be invoked. For example, an input device such as a touchscreen, mouse, trackpad, optical joystick and the like, may be used to move focus to a particular message listing entry (e.g., by moving a cursor or highlighting the entry). A further input event, such as a tap, click, keystroke, and so forth, can then be used to invoke an action in respect of the message in focus, such as an "open" action or a "reply" action to display the full message for reading or to initiate composition of a reply message, respectively.

Because of the amount of information potentially included in the message listing, and because physical display area may be limited, opening of a message for reading and composition of a new message, whether an originating message, a reply message, or a forwarding message, is typically handled in a separate screen window from the message listing. The electronic device 100 must detect an input command to initiate a reply message, so that it can respond by generating and displaying a message composition screen for receiving input reply content. Prior to the reply message command, the electronic device 100 may also be required to process an initial instruction to select a particular message and/or message group. Thus, the act of initiating a reply to a message incurs processing overhead, since the device 100 must not only detect and process these instructions, but must also engage in one or more memory reads to retrieve message group and individual message information even before the message composition screen is displayed.

This is particularly the case where the reply message is an email message. Email, as compared to other message formats such as instant messaging, is conventionally implemented in a manner that supports one-off or monolithic communications that do not need to rely on external data for context. For example, when an email message is constructed as a reply message or a forwarding message, an email message application includes the content of the parent message (i.e., the message for which it is a reply, or the message that is being forwarded) inline, or alternatively as an attachment. Context for the sender's message may thus be provided as part of the message; the recipient in that case does not need to rely on previous received messages or on his or her own knowledge of a previous conversation to have context. As a result, message composition interfaces designed for email correspondence are often designed with an expectation that the message may contain a large block of text, and are sized accordingly. Further, when a message composition screen is invoked for composing a reply or forwarding message, the data entry fields in the message composition screen are typically pre-populated with relevant data such as the quoted content of the parent message. As a result, the volatile memory allocated to message composition may be significantly increased, because the electronic device 100 must retrieve and display the parent message content in the composition screen, which increases the memory size of the draft reply message.

These potential inefficiencies may be addressed by providing an integrated message listing screen including not only the message listing, but also a reply message input field. The message listing screen can also include a full or partial view of a selected message or message group. A reply to a selected message can therefore be entered by the user in the input field, and sent to the recipient or recipients, without requiring the message application and the user to switch views or active screens to a separate message composition screen.

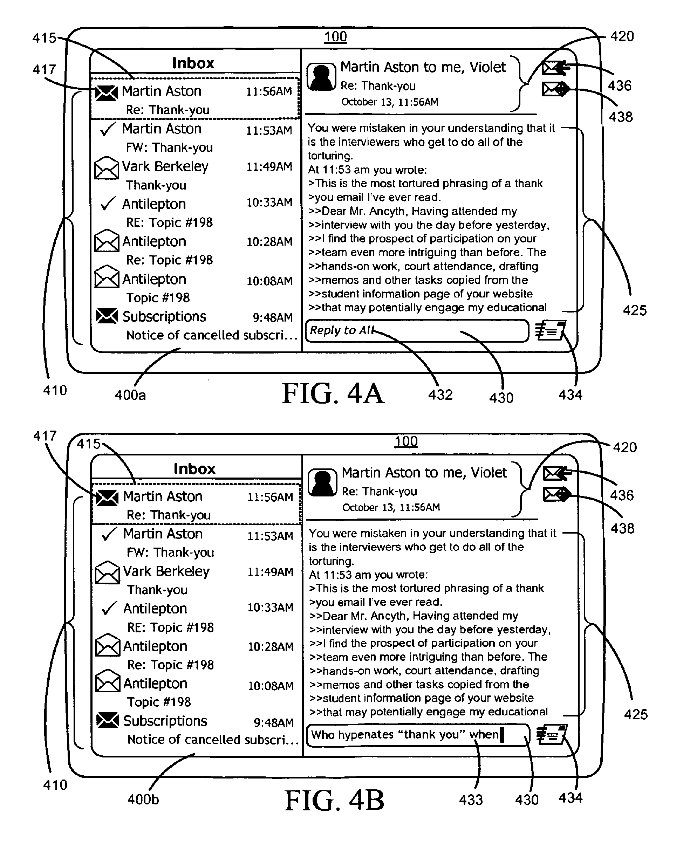

An example of this solution is illustrated in FIGS. 4A to 4D in the context of an email message application and email message listing display. FIG. 4A illustrates a message listing screen 400a as it may be displayed on an electronic device display 100, such as an external display screen or portable electronic device. The message listing screen may be invoked by a dedicated email message application 140c, or by an email inbox application adapted to present a listing of email messages available to the electronic device 100. The available messages need not be stored in their entirety at the electronic device 100; the complete message may be stored remotely (for example at a message server), with only select header information and optionally at least an excerpt of the message body stored at the electronic device 100. In other examples, the electronic device 100 may be configured to simply receive data comprising the content of the message listing screen and display this content in response to execution of a message application at a server, without the use of a messaging application at all. For example, the message listing screen may be rendered by a layout engine (such as that provided in a browser application) in a webpage or other HTML-based document at the electronic device 100, while the message data used to populate the document is provided by a server over a network connection.

The message listing screen 400a includes a message listing 410 and a message view comprising at least a portion of a selected email message. The message listing 410 may be considered to be, in this example, a typical email inbox message listing. As noted above, an "inbox" need not be restricted only to received messages, but may include sent messages as well as draft messages. Further, while the message listing may reflect only a portion of the messages included in the email data store-for example, the message listing may include only messages in a filtered set-in this example, the various messages included in the message listing are associated with different message groups or threads. The message listing 410 thus does not reflect only a single conversation or message thread, but reflects a plurality of conversations or message threads. The message listing 410 may include email messages associated with a plurality of accounts provisioned at or accessible to the electronic device 100.

The selected email message can be visually indicated in the message display screen, for example using highlighting or some other visual identifier. In FIG. 4A, the selected message is indicated by highlight box 415. In this example, the message view includes email message header information 420 and at least a portion of the message body 425. The message that is displayed in the message view may be selected by the user, or may be selected automatically upon invocation of the message listing screen 400a. For example, when the message application 140c is initiated at the electronic device 100 and the message listing screen 400a initialized for display, the most recent message or message group (e.g., the topmost message or group, where the message listing is arranged in reverse chronological order) is automatically selected. The content from the selected message 425 may constitute only a preview of the message; that is to say, if the message is a new message that was not previously marked as read or opened, display of the message in this manner in message listing screen may not result in the message being marked read or opened unless some additional positive action with respect to the message is carried out by the user. Examples of such positive action can include the composition or sending of a reply or forwarding message for that new message, or opening the message in a full-screen view distinct from the message listing screen.

The message listing screen 400a may optionally include graphical user interface elements that can be actuated (receive, via a user input mechanism of the electronic device 100, an input event such as a click, tap, and so forth that triggers a command associated with the user interface element) to invoke commands such as reply to message 436 and forward message 438. When a command is invoked by actuation of these particular elements 436, 438, a new message compose screen is invoked and displayed in a manner known in the art.

In addition, the message listing screen 400a includes a reply message input field 430 and a send command graphical user interface element 434 that permit the user and electronic device 100 to bypass the invocation of the message compose screen. The reply message input field 430 may be superimposed as a separate input element over the field containing the previous message content 425; thus, some of the previous message content 524 may be obscured by the message input field 430, but may be viewed by scrolling the content 425 in the message listing screen 400a. Content such as text, graphics or code in reply to the message displayed at 420, 425 may be input into the reply message input field 430 using one or more input devices associated with the electronic device 100, such as a physical keyboard 116 or virtual keyboard. The reply message input field 430 may include helper text 432 indicating to the user the effect of activating the field 430. In this example, the helper text 432 indicates that content entered into the field 430 will be used in a "reply to all" message-that is, the content will be used in a message that replies to all participants in the selected message, rather than only the sender. The same helper text 432 may be displayed even in those cases where there is only one recipient of a reply message identifiable in the selected message, although in some examples the helper text 432 may be altered to read "reply" so as to indicate that the reply will be sent to only one recipient unless the user further edits the reply message (for example by invoking a full compose message screen using the reply command user interface element 436).

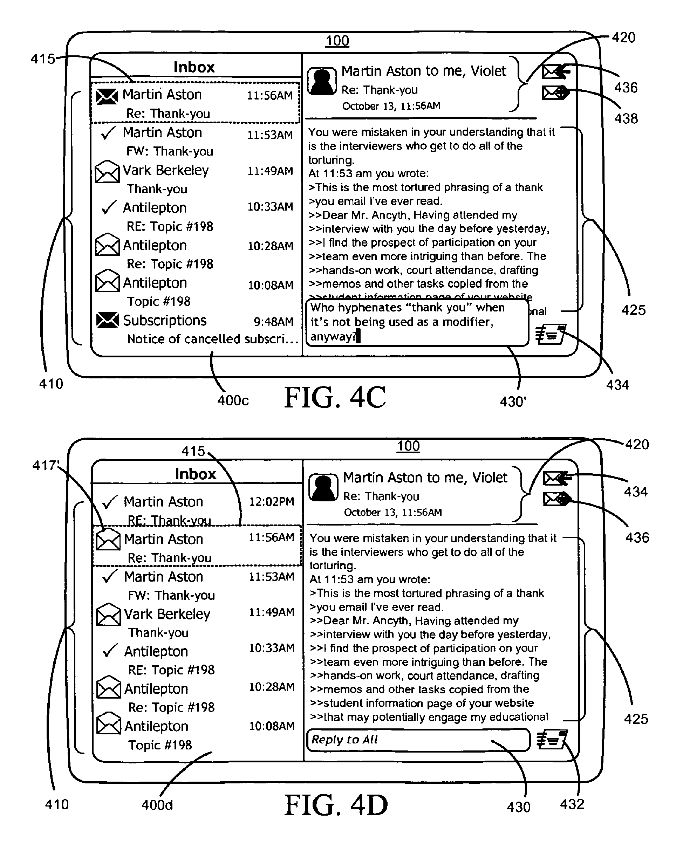

When content is entered in the reply message input field 430, any helper text may be automatically replaced with the input content. The message listing screen 400b of FIG. 4B illustrates that input text 433 has now replaced the helper text 432 of FIG. 4A. To maximize available display area for other content in the message listing screen 400a, the reply message input field 430 is sized to accommodate a single line of text, as can be seen in FIGS. 4A and 4B. However, if the content being input exceeds the display space in the field 430, in some examples the field 430 may automatically expand within the message listing screen to accommodate additional lines of content. Turning to FIG. 4C, continued input of the reply content in the reply message input field 430' has resulted in the expansion of the field 430' in the message listing screen 400c such that it further overlaps some of the adjacent message content 425. The reply message input field 430, 430' thus provides a non-scrolling input element for receiving reply message content, rather than requiring the messaging application to generate and display a separate screen for inputting the reply message content.

The examples illustrated in the accompanying drawings show that the message listing 410 is provided in a first pane or display portion, while the view of the selected message 420, 425 and the reply message input field 430 is provided in an adjacent second pane or portion. It will be appreciated by those skilled in the art that other arrangements may be implemented. However, by including the reply message input field 430 in a screen position adjacent the selected message view, the user is able to easily refer to the message for which a reply is being composed in the reply message input field 430.

Once the content has been entered into the reply message input field 430 or 430', upon detection of a send command a reply message can be constructed using the input content. As mentioned above, the message listing screen can include a user interface element 434 representing a send command. Actuation of this element 434 thus invokes an instruction to generate the reply message. The send command may be invoked using other means. For example, the message listing screen may be configured to process input of a carriage return or line break character or signal (e.g., depressing an "enter" or "return" key on a physical or virtual keyboard, or depressing a trackpad or button on the electronic device 100) as both termination of reply content input and the send command. Alternatively, if the message listing screen is configured to receive the carriage return or line break signal as reply message content input (i.e., signifying a new line in the reply message being composed in the reply message input field 430, 430'), then actuation of the user interface element 434 or selection of a context menu option (not illustrated) may be required.

In response to the send command, the reply content input at the message listing screen is provided to the message application 140c, which inserts the reply content into a message body. The message header for the reply message is configured based on the message for which the reply is intended. Thus, the message application 140c identifies which message in the message listing 410 was selected-i.e., the message displayed at 420 and 425-and constructs the reply email containing the reply content, addressing the reply message to the sender and any other recipients of that message. Optionally, text and/or images or other content, such as an email signature, can be automatically inserted in the reply message body. Message signatures are often pre-configured by the user or an administrator and stored either at the electronic device 100 itself, or at the message server receiving and sending messages on the user's behalf.

In this manner, input content for a reply message is received, and the reply message generated and transmitted, without the need for the user to first invoke a distinct or prior "reply" or "reply-all" command, and without the need for a separate screen for receiving input for the reply message. As noted above, actuation of one of the elements 436, 438 (for example by detection of a touch event at the element 436, 438 when they are displayed on a touchscreen, or by detection of a mouse event such as a click) results in invocation and display of a new message compose screen in a manner known in the art. This new message compose screen is distinct from the message listing screen illustrated in the accompanying drawings. In operating environments such as those implemented on mobile devices with smaller physical display screens 110, application screens are typically programmed to occupy the entire displayable area of the display 110, and so the new message compose screen usually obscures the entire message listing screen. In an example operating system environment, a single application can generate a plurality of screens, such as the message listing screen and new message compose screen, which are stored as screen objects in a set or display stack, with the first or top object being the screen that is currently displayed. When a given screen in the set is designated as the active screen-and thus displayed on the display 110 and able to receive input events-it is pushed to the top of the display stack. When the screen is closed (for example, dismissed in response to user command), it is removed from the display stack, and the next screen in the stack is displayed. Thus, the new message compose screen and the message listing screen are discrete screen objects, and only one is displayed at the display 110 and is active at a given time. In operating environments permitting "windowed" displays, in which an application screen is displayed in a virtual window or tile that can overlap or be overlapped by other application windows (which may occupy the entire physical display 110, or only a portion thereof), the message listing screen may be displayed in a first window, and when invoked by actuation of the element 436, 438 or by some other received command, the new message compose screen is displayed in a window that becomes the new active window. In the case of a windowed environment, focus moves to the new active window, such that it is active and capable of receiving input. If the message listing screen is to receive input, it must first be made the active window by either closing the new message compose screen window or through express selection of the message listing screen window. Either way, the message listing screen or window ceases to be the active display, and ceases to be able to receive input events such as reply message content input. However, in the example described above, the reply message input field 430 included in the message listing screen avoids the need for the display of a discrete new message compose screen, and permits the message listing screen to continue to be displayed and to continue to remain the active screen.

As mentioned above, the message listing screen may be a rendered document presented at the electronic device 100 based on data received from a server, as in the case where messaging functions are provided as a web-based service. In that case, in response to the send command detected at the message listing screen, the input reply message content is transmitted to the server, where the reply message is constructed as described above.

The result of execution of the send command is illustrated in the message listing screen 400d of FIG. 4D, where it can be seen that the selected message, denoted by highlight box 415, is no longer in the same position shown in FIGS. 4A-4C at the top of the message listing 410. The selected message is now the second message, preceded by the more recent sent message. It can also be seen, referring back to FIGS. 4A-4C, the icon 417 previously displayed with the message listing entry highlighted at 415 was a closed envelope, denoting an unread message. As a result of a reply message being transmitted, the selected message is deemed to have been read, and its status updated accordingly. When the message listing screen 400d is updated, the icon associated with the message is updated as well to an open envelope 417', indicating that it is a read message. The message view 420, 425 remains the same, since the same message remains selected as indicated by the highlight box 415. The reply message input field 430 reverts back to its original state.

Thus, the user is able to compose and send a message in reply to a selected message without being required to invoke a separate message compose screen or to exit the screen displaying the message listing. The reply message inbox field 430 integrated with the message listing in the screen 400a thus bypasses the extra steps typically required to open a message for reading, then to invoke a message composition screen to compose a reply.

It will be appreciated by those skilled in the art that the message listing screen is the active screen or window displayed by the electronic device 100 such that it is able to receive input events, such as the entry of content in the reply message input field 430 and optional actuation of the send command user interface element 434. That is to say, even in a windowed environment where the electronic device 100 operating system is capable of displaying multiple application user interfaces in an overlapping or adjacent manner (such as in overlapping or adjacent windows), the message listing screen is the interface that is active while the content is entered in the reply message input field 430 and the send command is detected. The generation and transmission of the reply message may also be carried out while the message listing screen is the active displayed screen, although the generation and transmission may be carried out while the message listing screen is not the active screen or interface displayed on the device 100.

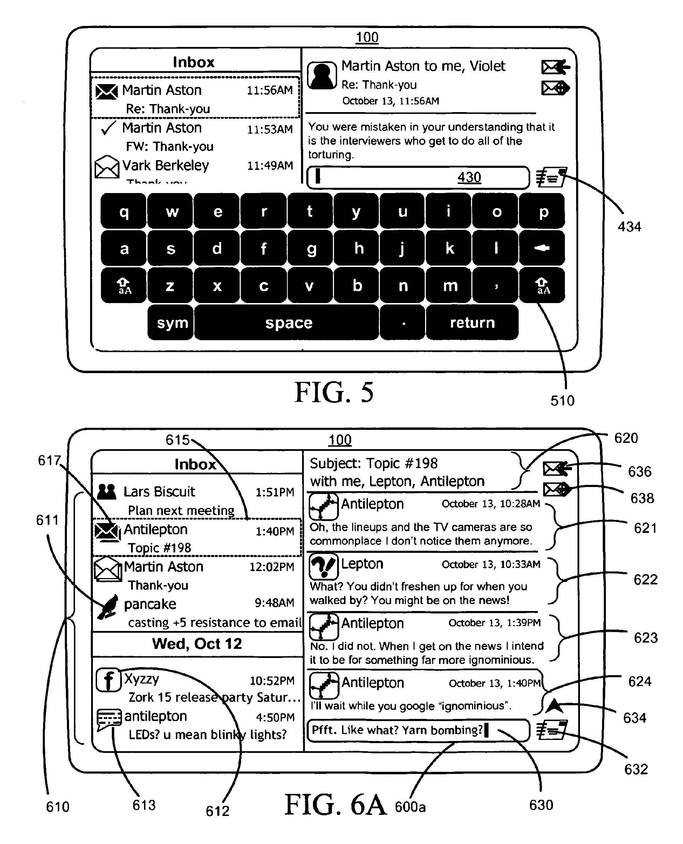

It will also be appreciated that these examples may be implemented on touchscreen devices and non-touchscreen devices alike. In the case of a touchscreen-based device, such as a tablet computing device or smartphone, a virtual keyboard may be invoked for content entry. An example of a virtual keyboard 510 is illustrated in FIG. 5. When the message listing screen detects that focus has been moved to the reply message input field 430 or the field 430 has been selected (for example by moving a cursor to the field 430), the message application 140a..c or the operating system of the electronic device 100 may be configured to automatically invoke the virtual keyboard on the touchscreen display. In the example of FIG. 5, the virtual keyboard 510 overlays a portion of the message listing screen, and the reply message input field 430 and send command user interface element 434 are shifted on the screen so that they are not obscured by the keyboard 510. Upon invocation of the send command, the virtual keyboard 510 may then be automatically dismissed, or else the virtual keyboard may be manually dismissed. For ease of reference in the remaining accompanying drawings, the virtual keyboard is omitted but is not intended to be expressly excluded as a possible implementation.

FIGS. 4A through 5, illustrate an examples directed to an email application and an email message listing. While FIGS. 4A to 5 illustrate a message listing of individual messages only, it will be understood by those skilled in the art that this email examples may also be implemented where the email application is configured to present the emails in a group listing, for example using the conversation manager 380 described above.

The example shown in FIGS. 6A to 6D combines the message grouping feature with further examples for a universal messaging application 140a or universal inbox function configured to include messages of different types and formats in the message listing. It will be understood by those skilled in the art, however, that the examples of FIGS. 6A to 6D may be applied, with appropriate modification, to those examples where the messaging application 140a displays messages of only one type. Turning to the message listing screen 600a of FIG. 6A, the message listing 610 lists a plurality of distinct message groups or threads, and includes a number of different message types representing different message formats, including private or direct messages, social messages 611, 612, instant messages or short messages 613. Social messages are messages of a standard or proprietary format that typically incorporate a social networking aspect. The direct recipient of a social message may be a social networking account associated with the sender, but access to the message may not be limited to the direct recipient; instead, the social message may be made publicly accessible or accessible to a broader set of users of the third party service or social networking service. For example, those users who have "friended" or who "follow" the online interactions and activities of the sender may be able to access and read the social message, or will be indirect recipients of the social message through receipt of a notification or a copy of the social message using their own social networking or messaging accounts. These indirect recipients, in some embodiments, are subscribed to a feed of messages and/or posts sent by the sender to the social networking service. Some social networking services permit the indirect recipients to reply to the sender's social message, either privately (i.e., accessible by the sender alone) or publicly or quasi-publicly (e.g., replies may be accessible by friends and followers). This reply feature may be provided in addition to other private messaging services offered by the social networking service.

For example, in the case of a social message published via the Twitter™ service, offered by Twitter, Inc., San Francisco, CA 94107, a "tweet" or message, once sent to the Twitter service, may be published and accessible by any member of the public; the message may also include a reference to one or more Twitter userids (e.g., @recipient1, @recipient2) to indicate that the message is intended as a reply to the recipients with those userids, if they exist. As another example, the social message 612 may be a posting by a social network user to their account, where it is accessible by the user's "friends" or subscribers, including via a unified inbox application executing at the electronic device 100. Replies send in response to such postings 612 may be visible not only to the user who originally posted the message 612, but also to those friends or subscribers.

FIG. 6A also illustrates a possible display of one of the plurality of message groups or threads listed in the message listing 610. The selected entry in the message listing 610, as indicated by highlight box 615, is an email message thread as indicated by the multiple envelope icon 617. Rather than displaying a single message in the message view in the manner of FIGS. 4A-4D, the message listing screen 600a displays a plurality of messages from the selected message group in a conversational paradigm. Thus, a header including the subject line of the message group and the participants (senders and recipients of messages within the group) 620 may be displayed, as well as a series of message excerpts from the thread 621, 622, 623, 624. In FIG. 6A, the series of message excerpts is displayed in chronological order, with the most recent message 624 displayed at the bottom of the series, adjacent the reply message input field 630 (in the screen 600a, reply content has already been entered in the field 630). As in FIG. 4A, this display of messages in the group may be considered to be a preview of the messages. If the number of messages in the group exceeds the available display space in the message listing screen 600a, only the most recent messages will be visible in the display. Other messages in the group may be viewable by scrolling this portion of the screen 600a while the reply message input field 630 remains stationary. Thus, in the case of a reply to a previous email message, the reply message content entered by the user is entered in a non-scrolling input element that is superimposed over the previous email message content (or in the case of the email message thread of FIG. 6A, the content of one or more previous emails).

Typically, in an email conversation including reply messages, reply messages include quoted text from the previous message. In this example, only the new content of each message is excerpted for display. Algorithms for identifying and extracting new message content from a reply email message are known in the art.

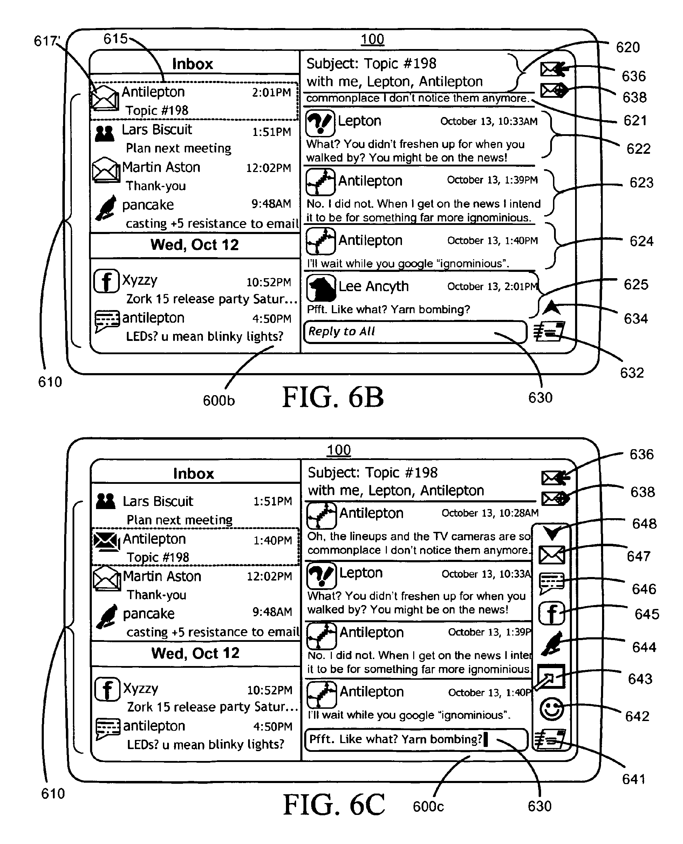

The message listing screen 600a also includes, as before, reply and forward command user interface elements 636, 638, which may be actuated to invoke a full message composition screen, as well as a send command user interface element 632 adjacent the input field 630. FIG. 6B illustrates the effect of invoking the send command after entry of the reply message content in the input field 630 of FIG. 6A. As before, a reply message is constructed for the message group or thread using the input content. In particular, since an entire message group or thread is selected (as indicated by the highlight box 615), the most recent individual message in the message thread is selected by the message application 140 as the message for which the reply is constructed. The reply message containing the input content from the input field 630 is thus addressed to all the other recipients and the sender of that most recent message. In some examples, rather than indiscriminately selecting the most recent message in the thread as the message for which the reply is constructed, the most recent message in the thread that is also a received message is selected. Thus, in some instances, the selected message is not necessarily the most recently received message in the thread. Construction of the reply message can include insertion of content from the selected individual message (i.e., quoted text).

In message listing screen 600b, as a result of the transmission of the reply message, the reply message input field 630 is cleared, and the message listing 610 is updated to reflect the change to the status of the message threads listed therein. In particular, since the sent reply message has been added to the selected message thread, the entry for that message thread is moved to the top of the listing, and remains highlighted by highlight box 615. Further, the icon 617 associated with the thread in FIG. 6A has been changed from a closed envelope (indicating the inclusion of an unread message in the thread) to an open envelope 617' (indicating that all messages have been read). Further, the series of message excerpts displayed adjacent the message listing has been updated to include an excerpt from the most recent sent message 625.

Since in the example of FIGS. 6A and 6B multiple message types and formats may be represented, the inbox application providing the message listing screens 600a, 600b is also configured to send the reply content entered in the input field 630 to the appropriate message application for generation of the reply message. Thus, the message listing screen may also be configured to accept commands to send the reply content to a different message application than the one associated with the selected message or message group. In the example of FIG. 6A, the message listing screen 600a includes an optional arrow icon 634 denoting availability of commands in addition to the send command 632. Consider the example of FIG. 6A, where the selected message or message thread highlighted at 615 is an email thread. In FIG. 6B, the reply message based on the input content in the field 630 was sent as an email message. Alternatively, a different command may be selected.

User interface elements representing the additional commands may be displayed in response to a user input such as actuation of the arrow icon 634, or in the case of a touchscreen-based device, a gesture or touch event detected by the touchscreen such as a sustained ("long") press on the send command user interface element 632, or a swipe gesture originating at the element 632. FIG. 6C illustrates a further message listing screen 600c displaying user interface elements for a number of additional commands 641..648. In this example, user interface element 641 is the same send command element as element 632. Element 642 represents a command to invoke a menu of emoticons or other graphics for insertion into the reply message input field 630. Element 643 represents a command to invoke a full message composition screen, rather than the quick input field 630. Elements 644 and 645 represent commands to send the content input in field 630 as different social messages. Element 646 represents a command to send the input content as a SMS or instant message. Element 647 represents a command to send the input content as an email message. Element 648 represents a command to close the display of the additional user interface elements 641..648. The commands represented by elements 644..647 may comprise a combined selection of a message format and a send command; alternatively, these elements represent only commands to select the corresponding message format, and a further send command (e.g. actuation of the send command element 632) is still required.

The display of alternative message format options as represented by the various user interface elements 644..647 may be customized according to the message type of the currently selected message. For example, if the selected message or message thread is email, then the user interface element 647 need not be displayed, as actuation of the second command icon 641 will initiate transmission of the reply message as an email message. Further, the availability of any of the alternative message formats may be affected by the availability of contact information at for the recipients of the reply message. For example, the message thread currently displayed in FIG. 6C includes two participants besides the user of the electronic device 100. The unified inbox application may query an address book available to the device 100 to determine if corresponding SMS, IM, private, or social network addresses are available for the other participants. If no contact information is available for one or more of these alternate message types, then that message format option is deemed unavailable as an option, and the corresponding element 644..647 may either be omitted from the display, or greyed out to indicate its unavailability.

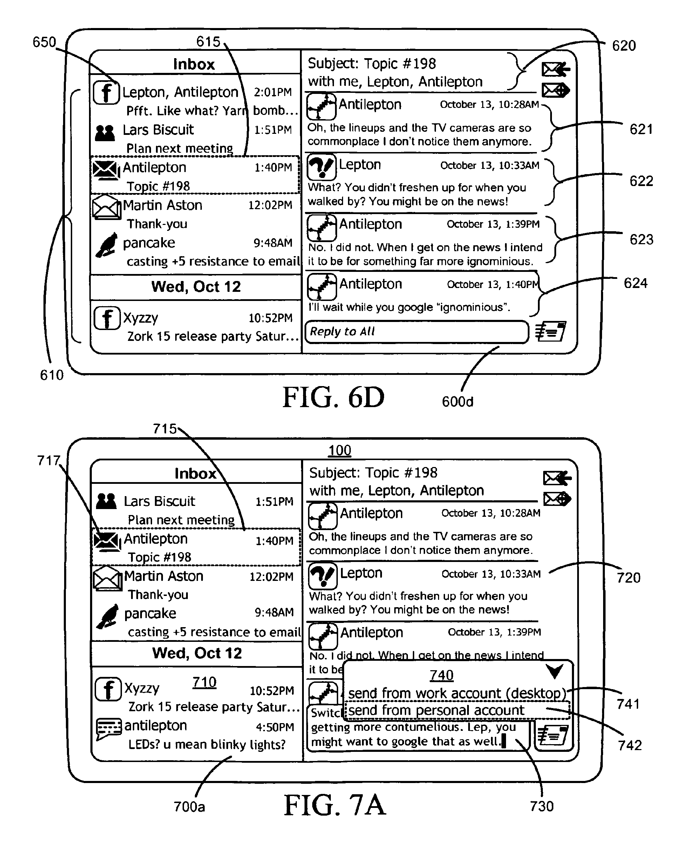

FIG. 6D illustrates an effect on the message listing screen where an alternate message type is selected for the reply message content entered in FIG. 6A. In this example, a social message format was selected instead. As a result, the display of the message excerpts 621..624 remains the same, since there has been no change to the status of the email message thread comprising these messages. However, as can be seen in the message listing 610, a new social message 650 has been added as the most recent message.

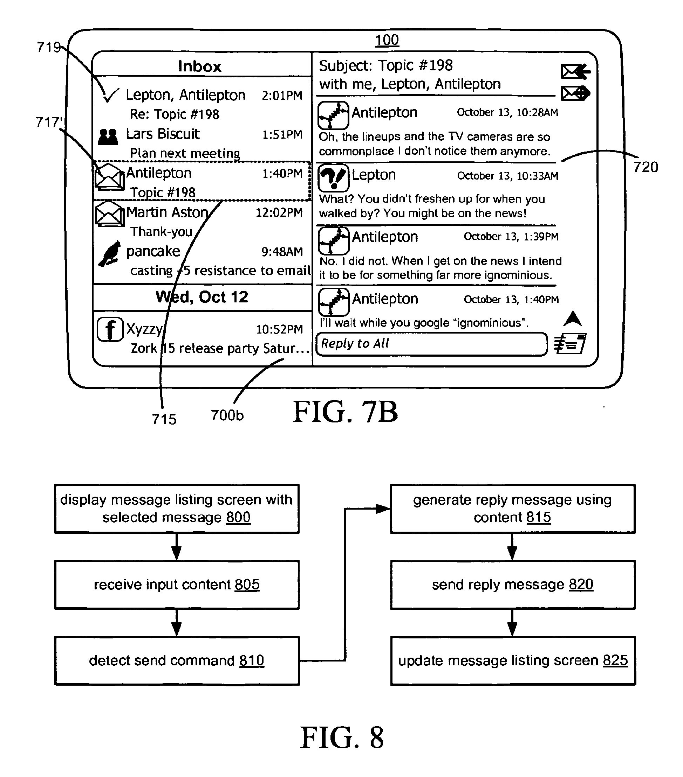

FIGS. 7A and 7B illustrate options for sending the reply message using different messaging accounts provisioned on the electronic device 100. As described above, the electronic device 100 may be provisioned for single or multiple messaging accounts, not only for multiple messaging formats or types, but also for multiple messaging services for the same message format. When a message is received at the electronic device 100, the message is received using one of the accounts provisioned on the electronic device 100. In a manner similar to that described in FIGS. 6C and 6D, the user may wish to change the account from which a reply to that message is sent.

FIG. 7A illustrates a message listing screen 700a, initially in a state similar to the message listing screen 600a of FIG. 6A, in that a listing of various messages (in this example, in a conversation or threaded view) is shown in a pane of the message listing screen 700a, with an entry selected in the displayed message listing 710, as indicated by the highlight box 715. The selected entry in this case is an email message thread, denoted by an icon 717 indicating that at least one message (in this example, the most recently received message) in the thread has not been marked read or opened. A preview of at least some of the messages of the selected entry is shown in a preview pane 720 in a conversational paradigm, although in other examples only the most recent message may be shown. As with the other examples, a reply message input field 730 is provided in the message listing screen 700a. However, the send command user interface element, which may normally appear as the user interface element 632 shown in FIG. 6A, can be actuated to display additional options for sending the reply message. In the example of FIG. 7A, in response to a user input (such as the "long" press or other input described above), options for selecting a different messaging account for sending the reply message are displayed in an extended user interface element 740.

In FIG. 7A, two example options 741, 742 representing two different email messaging accounts are shown. These options may be selected from a plurality of messaging accounts provisioned on the electronic device 100 for sending and receiving messages, including accounts for instant messaging, SMS, social networking, email, and so forth. In particular, the messaging account options in FIG. 7A can be limited to those accounts corresponding to the same message format as the message or message thread currently selected in the message listing 710, or currently being previewed. Since, in the example of FIG. 7A, an email thread entry in the message listing is selected (as indicated by the highlight box 715), when the extended user interface element 740 is invoked, the electronic device 100 retrieves identifiers of email accounts provisioned on the device, and displays these identifiers in the element 740 as options 741, 742. Selection of one of these options by the user then configures the electronic device 100 to send the input reply text received in the field 730 in response to a selected message using the selected messaging account, even if this messaging account is different than the account used to receive the selected message at the electronic device 100. It will be appreciated by those skilled in the art that the selection of one of the options 741, 742 may result in the extended user interface element 740 being dismissed and replaced again by the original user interface element 632, which must then be actuated in turn to invoke the send command; alternatively, selection of one of the options 741, 742 may also invoke the send command. Either way, in response to the invocation of the send command, the reply message text input in the field 730 and a send instruction is passed to the appropriate application associated with the selected messaging account to generate and transmit the reply message. In those cases where one application is associated with multiple messaging accounts, the send instruction may comprise an indicator of the selected messaging account.

FIG. 7B illustrates a possible resultant message listing screen 700b resulting from the selection of one of the options 741, 742 to choose a sending account that is different from the account used to receive the message being replied to. Previously, the preview pane 720 contained content from the messages from the thread of the selected message listing entry indicated by highlight box 715 in FIG. 7A. However, when a different messaging account is selected for the reply message, the reply message may not be associated with the same message thread, since it is sent using a different account. Since the example of FIGS. 7A and 7B includes a message listing in which messages are organized by conversation or threads, the effect of the reply message being sent from a different account can be easily observed. In the new message listing screen 700b, a new message listing entry 719 for the reply message has been added. This entry is distinct from the message listing entry representing the original message thread, which is still selected as indicated by the highlight box 715 (however, the icon for this thread has been updated to icon 717', indicating that all messages in the thread have now been marked read or opened). On the other hand, if the electronic device 100 were configured to include all messages having the same subject line in the same thread, then the original message listing entry would have been updated (and optionally the preview pane 720 to include the new reply message content), and new message listing entry 719 would not appear.

The foregoing examples thus provide an electronic device and method adapted to provide for quick composition of a reply message to a selected message listed in a message inbox, without requiring the message inbox view to be dismissed or obscured by a separate message composition view. Further, composition of a reply email message is effected without requiring prior retrieval of an entirety of the parent message content for insertion in to a message composition field. Those skilled in the art will understand that aspects of the various examples described herein may be combined; for example, the selection of a different email account (or selection of a different account of the message type or format as the received message) illustrated in FIGS. 7A and 7B can be combined with the examples of FIGS. 4A to 6D, and in all examples, the message listing screens may be generated from data (such as a webpage and accompanying message data) received by the electronic device from a server, and rendered by the electronic device using an application such as a web browser.

A flowchart of the general method implemented in the above examples is illustrated in FIG. 8. At 800, a message listing screen is displayed. A message or message thread is selected, and either the message itself or excerpts therefrom are displayed in the message listing screen. The message listing screen includes a reply message input field, as described above.

At 805, input content is detected at the input field. Next, invocation of a send command is detected at 810, either via the message listing screen or via a different input mechanism. In response to the send command, a reply message is generated using the input content 815, and using the sender and any recipients of the selected message as addressees of the reply message. As described above, the format of this reply message may be different than the format of the selected message, the reply message may be sent and associated with a different messaging account than the account used to receive the selected message, or both. The reply message thus constructed is then sent at 820, then the message listing screen is updated as necessary at 825.

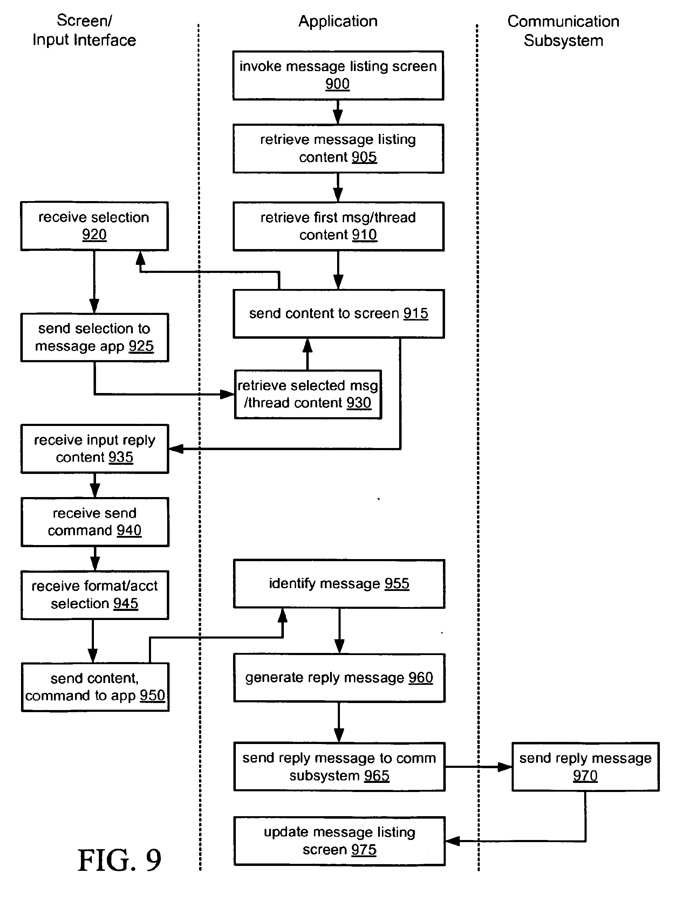

FIG. 9 illustrates further detail of this process, including selection of messages for display and reply. At 900, the message listing screen described above is invoked. This may take place when the message application or unified inbox application generating the message listing screen is launched or initialized. At 905, the application retrieves message listing content 905 from one or more data stores. An initial message or thread is also initially selected, and content for that initial message or thread is retrieved for display on the message listing screen at 910. The message listing content and message/thread content is sent to the screen for display at 915.

The message listing screen may receive an input event invoking selection of a different message or thread identified in the listing at 920. In response to this input event, the selection is sent to the application at 925, which then retrieves the relevant content for the selected message or thread at 930. This content is then sent to the message listing screen again at 915.

A further input event representing input of reply content in the reply message input field of the message listing screen is detected at 935. A send command is then detected at the message listing screen, or via a different input interface, at 940. If, as described in some examples above, a selection of a message format, messaging account, or both, is made, the selection of the format and/or account is received at 945. In some examples, the send command and the format and/or account selection is combined, so the actions represented by blocks 940 and 945 can be carried out as a single action. The input content and the send command are sent to the application at 950, which can include selection of the appropriate application for receipt of the input content and send command based on the previous selection of message format and/or account. In response to the send command, the message to which the input content is intended as a reply is identified at 955. This identification may comprise identification of the message that was already selected at 910 or 920; the identification may comprise identification of an individual message in a thread that was selected at 910 or 920. Thus, the recipients for the reply message may not be determined until after the send command is detected, since identification of the message that is being replied to is carried out in response to the send command. In addition, since the single reply message input field may be used to compose a reply to any selected one of the messages referenced by the message listing, the reply message input field need not be associated with any particular one message or message thread, as is typical when a separate new message compose screen must be invoked.

The reply message is then generated at 960 according to the selected format (either the format expressly selected with the send command, or the format of the identified message). The reply message is then sent by the application to a communication subsystem at 965 for sending to one or more recipients at 970. The communication subsystem may include an outgoing message queue, and/or a communication module adapted to send data over a network connection. Once the message is sent, the message listing screen may be updated at 975.

These is thus provided a method implemented at an electronic device, the method comprising: displaying a message listing screen including a listing of a plurality of messages associated with different message formats and a reply message input field, the message listing screen being active so as to receive input events; and while the message listing screen continues to be displayed and active, receiving an input event at the message listing screen comprising entry of content in the reply message input field; detecting a send command and a selection of a message format; and in response to the detected send command, sending the entered content in a reply message having the selected message format in reply to a selected message referenced by the listing.

In one aspect, the selected message format is different from a message format of the selected message for which the reply message is sent in reply.

In another aspect, the message format is selected from one of email format, instant message format, SMS format, and social message format.

In a further aspect, each of the plurality of messages is associated with a different messaging account provisioned at the electronic device for receiving and sending messages from the electronic device, and the reply message is sent using a different messaging account than the messaging account by which the selected message was received.

In still another aspect, wherein the send command comprises the selection of the message format.

The method may further include displaying a plurality of message format options in the message listing screen, wherein detecting the send command and the selection of the message format comprises detecting selection of one of the plurality of message format options.

Still further, the listing of the plurality of messages may comprise a listing of a plurality of different message threads, and the selected message is a most recent message in a selected one of the plurality of different message threads.

Further, the method may further comprise, in response to detecting the send command, identifying a message referenced in the listing of the plurality of messages as the selected message; and generating the reply message, the reply message including the entered content and being addressed to one or more recipients determined from the selected message.

In another aspect, the listing of the plurality of email includes both received and sent messages, and the method further comprises, after sending the reply email message, updating the message listing to include the reply message while the message listing screen remains active.

In a further aspect, the reply message input field is not associated with a single one of the plurality of messages or a single message thread.

In still a further aspect, receiving the input event comprising entry of content in the reply message input field occurs without prior receipt of a command to initiate a reply email message.

In yet a further aspect, the message listing screen includes a preview of the selected message and the reply message input field overlays the preview.

There is also provided an electronic device, which may include appropriate modules for executing the method and various aspects and examples described herein. An example of a suitable electronic device is provided above.

There is also provided a method implemented by an electronic device, the method comprising: displaying a message listing screen including a message listing and a reply message input field; and while said message listing screen is displayed and active, the message listing screen receiving an input event comprising entry of content in the reply message input field; and detecting a send command; and in response to the detected send command, sending said content in a reply message in reply to a selected message in the message listing.

There is also provided a method implemented by an electronic device, the method comprising: displaying a message listing and a reply message input field; receiving input content in the reply message input field; detecting a send command; and in response to the detected send command, identifying a message from the message listing; generating a reply message in reply to the identified message, the reply message including said content and being addressed to one or more recipients determined from the identified message; and sending the reply message.

Further, there is provided a method implemented by an electronic device, the method comprising: displaying a message listing screen including a listing of a plurality of message threads, content from at least two messages associated with a selected one of the plurality of message threads, and a reply message input field; and while said message listing screen is displayed and active, the message listing screen receiving an input event comprising entry of content in the reply message input field; detecting a send command; and in response to the detected send command, sending said content in a reply message in reply to the selected message thread.

There is also provided a method implemented by an electronic device, the method comprising: displaying a message listing screen including a listing of a plurality of messages associated with different message threads, content from at least one message selected from the plurality of messages, and a reply message input field; and while said message listing screen is displayed and active, the message listing screen receiving an input event comprising entry of content in the reply message input field; detecting a send command; and in response to the detected send command, sending said content in a reply message in reply to the selected message.

In one aspect, the reply message includes at least a portion of the selected message.

In another aspect, the reply message includes a message signature stored at the electronic device.

In a further aspect, the message listing includes received and sent messages, and the method further comprises, after said sending, updating the message listing to include the reply message.

In still further and separate aspects, the reply message is addressed to one or more recipients determined from the selected message; the send command is detected as an input event by the message listing screen; the message listing screen further includes at least a portion of the selected message; the reply message input field is adjacent to said at least a portion of the selected message; the message listing includes a listing of a plurality of message groups, and the selected message comprises a most recent message of a selected message group in the message listing; the message listing comprises a plurality of message types, which may be selected from email, instant messages, short messages, and social messages; the method may further comprise, prior to detecting the send command, receiving a selection of a message type; and the reply message is formatted as the selected message type; the send command comprises a selection of a message type, and the reply message is formatted as the selected message type; the selected message type is different than a message type of the selected message; the message listing comprises a single message type, which may be email; the single message type is email; the reply message input field comprises a single line input field; entry of said content comprises receipt of input via a virtual keyboard; the virtual keyboard overlays the message listing screen; the method further comprises detecting a selection of the selected message at the message listing screen; the method further comprises, in response to detecting the selection of the selected message, displaying at least a portion of the selected message prior to receiving the input event; the content comprises one or more of text, an image, and code identifying an image.

There is also provided an electronic device and/or a server configured to implement the foregoing methods.

There is also provided a computer program product, which may be physical, tangible, or non-transitory, storing code which, when executed by one or more processors of an electronic device and/or server, causes the device and/or server to implement the foregoing methods.

The systems and methods disclosed herein are presented only by way of example and are not meant to limit the scope of the subject matter described herein. Other variations of the systems and methods described above will be apparent to those in the art and as such are considered to be within the scope of the subject matter described herein. For example, it should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments and examples described herein.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits comprising custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rightsholder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method implemented at an electronic device, the electronic device comprising a plurality of dedicated messaging applications each being associated with a different message format and a unified inbox application, the method comprising:
the unified inbox application displaying (915) a message listing screen including a listing of a plurality of messages associated with different message formats and a reply message input field, the message listing screen being active so as to receive input events; and
while the message listing screen continues to be displayed and active,
receiving (935) an input event at the message listing screen comprising entry of content in the reply message input field;
detecting (940, 945) a send command and a selection of a message format; and
in response to the detected send command:
selecting a dedicated application according to the selected message format for receipt of the entered content and send command;
providing (950) the entered content and the send command to the selected dedicated application;
identifying (955) one message referenced in the listing of the plurality of messages;
generating (960), by the selected dedicated application, a reply message in the selected message format including the entered content, the reply message being addressed to one or more recipients determined from the identified message; and
sending (965, 970) the reply message.

2. The method of claim 1, wherein the selected message format is different from a message format of the identified message to which the reply message is sent in reply.

3. The method of either claim 1 or 2, wherein the selected message format is selected from one of email format, instant message format, SMS format, and social message format.

4. The method of any one of claims 1 to 3, wherein each of the plurality of messages is associated with a different messaging account provisioned at the electronic device for receiving and sending messages from the electronic device, and the reply message is sent using a different messaging account than the messaging account by which the identified message was received.

5. The method of any one of claims 1 to 4, wherein the send command comprises the selection of the message format.

6. The method of any one of claims 1to 4, further comprising displaying a plurality of message format options in the message listing screen, wherein detecting the send command and the selection of the message format comprises detecting selection of one of the plurality of message format options.

7. The method of any one of claims 1to 6, wherein the listing of the plurality of messages comprises a listing of a plurality of different message threads, and the identified message is a most recent message in a selected one of the plurality of different message threads.

8. The method of any one of claims 1 to 7, wherein the plurality of messages are received from a plurality of senders.

9. The method of any one of claims 1to 8, wherein the listing of the plurality of messages includes both received and sent messages, and the method further comprises, after sending the reply message, updating (975) the message listing to include the reply message while the message listing screen remains active.

10. The method of any one of claims 1to 9, wherein the reply message input field is not associated with a single one of the plurality of messages or a single message thread.

11. The method of any one of claims 1to 10, wherein receiving the input event comprising entry of content in the reply message input field occurs without prior receipt of a command to initiate a reply email message.

12. The method of any one of claims 1to 11, wherein the message listing screen includes a preview of the selected message and the reply message input field overlays the preview.

13. An electronic device comprising means adapted to implement each of the steps of the method of any one of claims 1 to 12.

14. The electronic device of claim 13, wherein the electronic device comprises a mobile device.

15. An electronic device-readable medium bearing code which, when executed by an electronic device, causes the device to implement each of the steps of the method of any one of claims 1 to 12.

## Patentansprüche

1. Verfahren zur Implementierung an einer elektronischen Vorrichtung, welche elektronische Vorrichtung eine Mehrzahl bestimmter Nachrichten-Applikationen aufweist, von denen jede mit einem unterschiedlichen Nachrichtenformat verknüpft ist, sowie eine einheitliche Eingangs-Applikation, welches Verfahren umfasst:
die einheitliche Eingangs-Applikation zeigt (915) eine Listenansicht-Darstellung für Nachrichten mit einer Liste einer Mehrzahl von Nachrichten, die mit unterschiedlichen Nachrichtenformaten verknüpft sind, und ein AntwortNachrichteneingabefeld, wobei die Listenansicht-Darstellung für Nachrichten aktiv ist, um so Eingabeereignisse zu empfangen; und
während die Listenansicht-Darstellung für Nachrichten weiterhin anzeigt und aktiv ist,
Empfangen (935) eines Eingangsereignisses in der Nachrichtenlisten-Darstellung umfassend eine Eingabemöglichkeit in dem AntwortNachrichteneingabefeld;
Detektieren (940, 945) eines Sendebefehls und Auswahl eines Nachrichtenformates; und
in Antwort auf den detektierten Sendebefehl:
Auswählen einer bestimmten Applikation gemäß dem ausgewählten Nachrichtenformat zum Empfangen des eingegebenen Gehalts und des Sendebefehls;
Vorsehen (950) des Eingabegehaltes und des Sendebefehls an die ausgewählte zugewiesene Applikation;
Identifizieren (955) einer der auf der Liste der mehreren Nachrichten bezogene Nachricht;
Generieren (960) einer Antwort-Nachricht durch die ausgewählte bestimmte Applikation in dem ausgewählten Nachrichtenformat einschließlich des eingegebenen Gehalts, wobei die Antwort Nachricht an einen oder mehrere Empfänger gerichtet ist, die aus der identifizierten Nachricht bestimmt werden; und
Senden (965, 970) der Antwort-Nachricht.

2. Verfahren nach Anspruch 1, wobei das ausgewählte Nachrichtenformat sich von einem Nachrichtenformat der identifizierten Nachricht unterscheidet, auf die die Antwort-Nachricht in Erwiderung hierauf gesendet wird.

3. Verfahren nach Anspruch 1 oder 2, wobei das ausgewählte Nachrichtenformat ausgewählt wird aus einem E-Mail-Format, einem Sofortnachrichten-Format, SMS-Format oder einem Sozialnachrichten-Format.

4. Verfahren nach einem der Ansprüche 1 bis 3, wobei jede Nachricht aus der Mehrzahl an Nachrichten mit einem unterschiedlichen Nachrichtenaccount assoziiert wird, der in der elektronischen Vorrichtung zum Empfangen und Senden von Nachrichten von der elektronischen Vorrichtung abgelegt ist, und wobei die Antwort-Nachricht unter Verwendung eines gegenüber dem Nachrichtenaccount, durch den die identifizierte Nachricht erhalten wurde, unterschiedlichen Nachrichtenaccount gesendet wird.

5. Verfahren nach einem der Ansprüche 1 bis 4, wobei der Sendebefehl die Auswahl des Nachrichtenformats umfasst.

6. Verfahren nach einem der Ansprüche 1 bis 4 ferner umfassend eine Anzeige einer Mehrzahl von Nachrichtenformat-Optionen in der Nachrichtenlisten-Darstellung, wobei das Detektieren des Sendebefehls und die Auswahl des Nachrichtenformats eine Detektionsauswahl einer Option aus der Mehrzahl an Nachrichtenformat-Optionen umfasst.

7. Verfahren nach einem der Ansprüche 1 bis 6, wobei das Listen der Mehrzahl von Nachrichten ein Listen einer Mehrzahl unterschiedlicher Nachrichtenstränge umfasst, und die identifizierte Nachricht eine jüngste Nachricht in einem ausgewählten Strang der Mehrzahl unterschiedlicher Nachrichtenstränge ist.

8. Verfahren nach einem der Ansprüche 1 bis 7, wobei die Mehrzahl an Nachrichten durch eine Mehrzahl an Sendern empfangen wird.

9. Verfahren nach einem der Ansprüche 1 bis 8, wobei das Listen der Mehrzahl von Nachrichten sowohl empfangene als auch gesendete Nachrichten umfasst, und das Verfahren ferner aufweist, dass nach dem Senden der Antwort-Nachricht ein Erneuern (975) des Nachrichten-Listings erfolgt, um die Antwort-Nachricht zu umfassen, während die Nachrichtenlisten-Darstellung aktiv bleibt.

10. Verfahren nach einem der Ansprüche 1 bis 9, wobei das AntwortNachrichteneingabefeld nicht mit einer einzelnen aus der Mehrzahl an Nachrichten oder einem einzelnen Nachrichtenstrang assoziiert wird.

11. Verfahren nach einem der Ansprüche 1 bis 10, wobei ein Empfangen des Eingangsereignisses umfassend den Eingabegehalt in dem AntwortNachrichteneingabefeld erscheint, und zwar ohne vorheriges Empfangen eines Befehls um eine Antwort-E-Mail-Nachricht zu initiieren.

12. Verfahren nach einem der Ansprüche 1 bis 11, wobei die Nachrichtenlisten-Darstellung eine Voransicht der ausgewählten Nachricht umfasst, und das Antwort-Nachrichteneingabefeld diese Voransicht überlagert.

13. Elektronische Vorrichtung mit Mitteln, die zum Implementieren eines jeden Schrittes des Verfahrens nach einem der Ansprüche 1 bis 12 ausgelegt ist.

14. Elektronische Vorrichtung nach Anspruch 13, wobei die elektronische Vorrichtung eine mobile Vorrichtung aufweist.

15. Elektronisches gerätelesbares Medium mit einer Codierung, die bei Ausführung auf einer elektronischen Vorrichtung die Vorrichtung zum Implementieren eines jeden Schrittes des Verfahrens nach einem der Ansprüche 1 bis 12 veranlasst.

## Revendications

1. Procédé mis en oeuvre au niveau d'un dispositif électronique, le dispositif électronique comprenant une pluralité d'applications de messagerie dédiées, chacune d'elles étant associée à un format de message différent et à une application de boîte de réception unifiée, le procédé comprenant les étapes suivantes :
l'application de boîte de réception unifiée affichant (915) un écran de liste de messages qui comprend une liste d'une pluralité de messages associés à des formats de message différents et à un champ d'entrée de message de réponse, l'écran de liste de messages étant actif de façon à recevoir des événements d'entrée ; et
tandis que l'écran de liste de messages continue à être affiché et actif,
recevoir (935) un événement d'entrée au niveau de l'écran de liste de messages qui comprend une entrée d'un contenu dans le champ d'entrée de message de réponse ;
détecter (940, 945) une commande d'envoi et une sélection d'un format de message ; et
en réponse à la commande d'envoi détectée ;
sélectionner une application dédiée selon le format de message sélectionné pour la réception du contenu entré et de la commande d'envoi ;
fournir (950) le contenu entré et la commande d'envoi à l'application dédiée sélectionnée ;
identifier (955) un message référencé dans la liste de la pluralité de messages ;
générer (960), grâce a l'application dédiée sélectionnée, un message de réponse dans le format de message sélectionné qui comprend le contenu entré, le message de réponse étant adressé à un ou à plusieurs destinataires déterminés à partir du message identifié ; et
envoyer (965, 970) le message de réponse.

2. Procédé selon la revendication 1, dans lequel le format de message sélectionné est différent du format de message du message identifié auquel le message de réponse est envoyé en réponse.

3. Procédé selon les revendications 1 ou 2, dans lequel le format de message sélectionné est choisi parmi l'un d'un format de message électronique, d'un format de message instantané, d'un format de SMS, et d'un format de message social.

4. Procédé selon l'une quelconque des revendications 1 à 3, dans lequel chacun de la pluralité de messages est associé à un compte de messagerie différent prévu au niveau du dispositif électronique, destiné à recevoir et à envoyer des messages à partir du dispositif électronique, et le message de réponse est envoyé en utilisant un compte de messagerie différent du compte de messagerie par lequel le message identifié a été reçu.

5. Procédé selon l'une quelconque des revendications 1 à 4, dans lequel la commande d'envoi comprend la sélection du format de message.

6. Procédé selon l'une quelconque des revendications 1 à 4, comprenant en outre une étape consistant à afficher une pluralité d'options de format de message dans l'écran de liste de messages, dans lequel l'étape consistant à détecter la commande d'envoi et la sélection du format de message, comprend une étape consistant à détecter la sélection de l'une de la pluralité d'options de format de message.

7. Procédé selon l'une quelconque des revendications 1 à 6, dans lequel la liste de la pluralité de messages comprend une liste d'une pluralité de fils de messages différents, et le message identifié est le message le plus récent dans l'un sélectionné de la pluralité de fils de messages différents.

8. Procédé selon l'une quelconque des revendications 1 à 7, dans lequel la pluralité de messages sont reçus en provenance d'une pluralité d'émetteurs.

9. Procédé selon l'une quelconque des revendications 1 à 8, dans lequel la liste de la pluralité de messages comprend des messages reçus et envoyés, et le procédé comprend en outre, après l'étape consistant à envoyer le message de réponse, une étape consistant à mettre à jour (975) la liste de messages de façon à inclure le message de réponse tandis que l'écran de liste de messages reste actif.

10. Procédé selon l'une quelconque des revendications 1 à 9, dans lequel le champ d'entrée de message de réponse n'est associé à aucun de la pluralité de messages ou à aucun fil de message.

11. Procédé selon l'une quelconque des revendications 1 à 10, dans lequel la réception de l'événement d'entrée qui comprend l'entrée d'un contenu dans le champ d'entrée de message de réponse, se produit sans réception antérieure d'une commande destinée à lancer un message électronique de réponse.

12. Procédé selon l'une quelconque des revendications 1 à 11, dans lequel l'écran de liste de messages comprend une prévisualisation du message sélectionné et le champ d'entrée de message de réponse recouvre la prévisualisation.

13. Dispositif électronique comprenant des moyens adaptés de façon à mettre en oeuvre chacune des étapes du procédé selon l'une quelconque des revendications 1 à 12.

14. Dispositif électronique selon la revendication 13, dans lequel le dispositif électronique comprend un dispositif mobile.

15. Support pouvant être lu par un dispositif électronique, qui porte un code qui, quand il est exécuté par un dispositif électronique, provoque la mise en oeuvre par le dispositif de chacune des étapes du procédé selon l'une quelconque des revendications 1 à 12.
